# EUROPÄISCHE PATENTANMELDUNG

(11) **EP 4 494 772 A1**
(43) Veröffentlichungstag der Anmeldung: **22.01.2025**
(21) Anmeldenummer: 24188236.4
(22) Anmeldetag: 12.07.2024
(51) Int. Cl.: B08B 7/00, B08B 7/02, B08B 15/00

(54) **VORRICHTUNG ZUR KOLLEKTIVEN BEHANDLUNG VON OBERFLÄCHEN EINER VIELZAHL VON OBJEKTEN**

(30) Priorität: 18.07.2023 DE 202023104009 U
(71) Anmelder: SLCR Lasertechnik GMBH, 52353 Düren (DE)
(72) Erfinder: Schulz-Gaus, Olav G., 50126 Bergheim (DE)
(74) Vertreter: Paul & Albrecht Patentanwälte PartG mbB

(57) **Zusammenfassung**

Die Erfindung betrifft eine Vorrichtung zur kollektiven Behandlung von Oberflächen einer Vielzahl von Objekten mit einer Aufnahmeeinrichtung (1), die einen Aufnahmeraum für die zu behandelnden Objekte definiert, wobei der Aufnahmeraum durch eine Öffnung (6) der Aufnahmeeinrichtung (1) zugänglich ist, und einer Bestrahlungseinrichtung (2), die angeordnet und ausgebildet ist, um Strahlung in den Aufnahmeraum einzubringen und so in den Aufnahmeraum eingebrachte Objekte zu behandeln, wobei die Aufnahmeeinrichtung (1) mit dem Aufnahmeraum bewegbar ist, um insbesondere die Position und/oder die Ausrichtung des Aufnahmeraums zu verändern, wobei, dass die Aufnahmeeinrichtung (1) und die Bestrahlungseinrichtung (2) derart miteinander verbunden, insbesondere lösbar verbunden sind, dass die Bestrahlungseinrichtung (2) bei einer Bewegung der Aufnahmeeinrichtung (1) mitbewegt wird, so dass die relative Ausrichtung zwischen dem Aufnahmeraum und der Bestrahlungseinrichtung (2) unverändert bleibt.

## Beschreibung

Die vorliegende Erfindung betrifft eine Vorrichtung zur kollektiven Behandlung von Oberflächen einer Vielzahl von Objekten, insbesondere von Schüttgut, mit einer Aufnahmeeinrichtung, die einen Aufnahmeraum für die zu behandelnden Objekte definiert, wobei der Aufnahmeraum durch eine Öffnung der Aufnahmeeinrichtung zugänglich ist, und einer Bestrahlungseinrichtung, die angeordnet und ausgebildet ist, um Strahlung in den Aufnahmeraum einzubringen und so in den Aufnahmeraum eingebrachte Objekte zu behandeln, wobei die Aufnahmeeinrichtung mit dem Aufnahmeraum bewegbar ist, um insbesondere die Position und/oder die Ausrichtung des Aufnahmeraums zu verändern.

Derartige Vorrichtungen zur kollektiven Behandlung von Oberflächen sind aus der EP 3 932 572 A1 bekannt und dienen in erster Linie dazu, die Oberflächen einer Vielzahl von Bauteilen einer Laserbehandlung zu unterziehen und somit zu reinigen, aufzurauen, etc.. Die bekannte Vorrichtung weist hierzu eine Aufnahmeeinrichtung auf, welche einen Aufnahmeraum definiert, in welchen die zu behandelnden Bauteile in loser Schüttung eingebracht werden. Des Weiteren ist eine Bestrahlungseinrichtung vorgesehen, um die in dem Aufnahmeraum befindlichen Bauteile mit Laserstrahlung zu bestrahlen. Dabei werden die zu bestrahlenden Bauteile durchmischt, indem die Aufnahmeeinrichtung als Ganzes beziehungsweise eine Aufnahmetrommel, ein Aufnahmekorb oder dergleichen, der Aufnahmeeinrichtung, in welcher sich die Bauteile befinden, bewegt wird.

Es hat sich gezeigt, dass durch die bekannte Vorrichtung sehr gute Reinigungsergebnisse erzielt werden können. Die Bestrebungen gehen jedoch dahin, die Behandlungsqualität weiterhin zu verbessern.

Vor diesem Hintergrund liegt der vorliegenden Anmeldung die Aufgabe zugrunde, eine Vorrichtung zur kollektiven Behandlung von Oberflächen einer Vielzahl von Objekten der eingangsgenannten Art so auszugestalten, dass die Behandlungsqualität verbessert wird.

Diese Aufgabe ist bei einer Vorrichtung der eingangs genannten Art dadurch gelöst, dass die Aufnahmeeinrichtung und die Bestrahlungseinrichtung derart miteinander verbunden, insbesondere lösbar verbunden sind, dass die Bestrahlungseinrichtung bei einer Bewegung der Aufnahmeeinrichtung mitbewegt wird, so dass die relative Ausrichtung zwischen dem Aufnahmeraum und der Bestrahlungseinrichtung unverändert bleibt.

Der Erfindung liegt somit die Überlegung zugrunde, die Bestrahlungseinrichtung einerseits und die Aufnahmeeinrichtung andererseits während des Betriebs fest miteinander in der Weise zu verbinden, dass eine vorgegebene Ausrichtung zwischen der Bestrahlungseinrichtung und dem Aufnahmeraum auch dann beibehalten wird, wenn die Ausrichtung der Aufnahmeeinrichtung geändert wird. Es hat sich gezeigt, dass hierdurch die Behandlungsqualität des Schüttgutes verbessert werden kann.

Gemäß einer Ausführungsform der Erfindung ist vorgesehen, dass die Bestrahlungseinrichtung der Öffnung der Aufnahmevorrichtung gegenüberliegend angeordnet ist, um Strahlung durch die Öffnung in den Aufnahmeraum von außen einzubringen.

Beispielsweise kann die Bestrahlungseinrichtung an einer Halteeinrichtung, insbesondere einem Haltearm oder einem Halterahmen der Halteeinrichtung vorgesehen sein, welche(r) die Öffnung der Aufnahmeeinrichtung außenseitig überspannt, wobei dann die Bestrahlungseinrichtung der Halteeinrichtung bzw. an dem Haltearm/Halterahmen der Halteeinrichtung fixiert ist. Die Anordnung ist dabei so betroffen, dass die Bestrahlungseinrichtung vor der Öffnung der Aufnahmeeinrichtung positioniert ist oder sogar durch die Öffnung in die Aufnahmeeinrichtung hineinragt.

Dabei ist in Ausgestaltung einer Ausführungsform vorgesehen, dass die Halteeinrichtung, insbesondere, der Haltearm/Halterahmen, schwenkbar an der Aufnahmeeinrichtung gehalten ist und zwischen einer Arbeitsposition, in welcher die Halteeinrichtung bzw. der Haltearm/Halterahmen die Öffnung der Aufnahmeeinrichtung überspannt, und einer Befüllungsposition, in welcher die Halteeinrichtung bzw. der Haltearm/Halterahmen aus einer Arbeitsstellung weggeschwenkt ist, um die Öffnung der Aufnahmeeinrichtung freizugeben, verschwenkt werden kann. Zum Beladen/Entladen der Aufnahmeeinrichtung wird der Haltearm somit in seine Befüllungsposition gebracht, in welcher die Öffnung der Aufnahmeeinrichtung freigegeben ist. Zum Betrieb wird der Haltearm/Halterahmen in seiner Arbeitsstellung geschwenkt und in dieser fixiert, in welcher die Bestrahlungseinrichtung in den Aufnahmeraum einstrahlen kann.

In bekannter Weise kann die Aufnahmeeinrichtung eine den Aufnahmeraum definierende Aufnahmetrommel aufweisen, die an einem Rahmen oder einem Gehäuse der Aufnahmeeinrichtung gehalten ist und relativ dazu um eine Rotationsachse, insbesondere rotierend und/oder taumelnd, gedreht werden kann. Dabei erstreckt sich die Rotationsachse zweckmäßigerweise zentral durch die Öffnung der Aufnahmeeinrichtung und ist insbesondere senkrecht zu einer Ebene der Öffnung ausgerichtet. In diesem Fall ist die Bestrahlungseinrichtung mit dem Rahmen bzw. dem Gehäuse der Aufnahmeeinrichtung verbunden. Insbesondere kann die Halteeinrichtung an dem Rahmen bzw. dem Gehäuse der Aufnahmeeinrichtung befestigt sein.

Alternativ kann die Aufnahmeeinrichtung auch einfach nur durch ein Aufnahmebehältnis beispielsweise einen Aufnahmekorb, der den Aufnahmeraum definiert, gebildet sein. In diesem Fall ist die Strahlungseinrichtung an dem Aufnahmebehältnis befestigt.

Bei einer Ausführungsform der Erfindung ist vorgesehen, dass die Aufnahmeeinrichtung, insbesondere um eine horizontale Schwenkachse, schwenkend bewegbar, gelagert ist. Durch Ausführen einer entsprechenden Schwenkbewegung kann die Neigung der Aufnahmeeinrichtung eingestellt werden. Zweckmäßigerweise stehen die Schwenkachse und die Rotationsachse senkrecht zueinander.

Gemäß einer weiteren Ausführungsform der Erfindung ist vorgesehen, dass Befestigungsmittel vorgesehen sind, um die Anordnung aus Aufnahmeeinrichtung und Bestrahlungseinrichtung an einem Roboterarm zu befestigen. Bei dieser Ausgestaltung ist alternativ zu der schwenkenden Lagerung der Aufnahmeeinrichtung vorgesehen, dass die gesamte Anordnung bestehend aus Aufnahmeeinrichtung und Bestrahlungseinrichtung an einen Roboterarm gehängt wird, um durch diesen bewegt werden zu können.

In alternativer Weise ist gemäß einer weiteren Ausführungsform der Erfindung vorgesehen, dass die Bestrahlungseinrichtung an einer als Greifeinrichtung ausgebildete Halteeinrichtung befestigt ist, die an einem Roboterarm vorgesehen ist oder angebracht werden kann und die ausgebildet ist, die Aufnahmeeinrichtung zu greifen, um die Bestrahlungseinrichtung an der Aufnahmeeinrichtung lösbar zu befestigen.

In diesem Fall kann die Vorrichtung gekennzeichnet sein durch einen Roboter mit einem Roboterarm, an dem die Greifeinrichtung befestigt ist. Bei dieser Ausführungsform verfügt der Roboter über eine Greifeinrichtung, welche einen Teil der Halteeinrichtung bildet und mittels welcher die Aufnahmeeinrichtung gegriffen werden kann, um durch den Roboter bewegt zu werden. Die Bestrahlungseinrichtung ist an der Greifeinrichtung montiert, so dass die gewünschte feste Ausrichtung zwischen der Bestrahlungseinrichtung und dem Aufnahmeraum der Aufnahmeeinrichtung gewährleistet ist, wenn die Aufnahmeeinrichtung durch die Greifeinrichtung des Roboters gegriffen wurde.

Wie oben schon beschrieben kann die Aufnahmeeinrichtung durch ein einfaches Aufnahmebehältnis beispielsweise einen Korb gebildet sein, der den Aufnahmeraum definiert, welcher mit den zu behandelnden Bauteilen befüllt wird. In diesem Fall wird die Greifeinrichtung unmittelbar mit dem Aufnahmebehältnis verbunden. Bei einer Ausgestaltung der die Aufnahmeeinrichtung eine rotierende Trommel aufweist, die in einem Rahmengehäuse der Aufnahmeeinrichtung gelagert ist, wird die Greifeinrichtung mit dem Rahmen bzw. dem Gehäuse verbunden.

Erfindungsgemäß wird die Bestrahlungseinrichtung bei einer Bewegung der Aufnahmeeinrichtung mitbewegt oder mitgeführt. Jedoch kann die Position und/oder die Ausrichtung der Bestrahlungseinrichtung gegenüber der Aufnahmeeinrichtung frei eingestellt werden. Insbesondere ist es möglich, bei einer Veränderung der Ausrichtung und/oder Lage des Aufnahmeraums der Aufnahmeeinrichtung die Position und/oder die Ausrichtung der Bestrahlungseinrichtung in einer gewünschten Weise automatisch zu verändern. Hierzu sind entsprechende Steuerungen beziehungsweise Regelungen vorgesehen.

Die Bestrahlungseinrichtung kann wenigstens eine Bestrahlungsquelle aufweisen, die insbesondere als Laserstrahlquelle ausgebildet ist, wobei, bevorzugt, jede Strahlungsquelle individuell gegenüber der Aufnahmeeinrichtung verstellbar ist, um die Position und/oder die Ausrichtung einzustellen. Insbesondere können mehrere Bestrahlungsquellen vorgesehen sein. Dann ist es auch möglich, diese bei einer Veränderung der Lage/Ausrichtung des Aufnahmeraums in unterschiedlicher Weise zu verstellen. Schließlich kann vorgesehen sein, dass jede Strahlungsquelle eine zugeordnete Optik umfasst.

Schließlich kann die erfindungsgemäße Vorrichtung eine Absaugeinrichtung aufweisen, welche angeordnet und ausgebildet ist, um Prozessdämpfe aus dem Aufnahmeraum der Aufnahmeeinrichtung abzusaugen. Die Absaugeinrichtung kann an der Halteeinrichtung, insbesondere an dem Haltearm bzw. Halterahmen oder der Greifeinrichtung befestigt sein, die auch die Bestrahlungseinrichtung trägt.

Hinsichtlich weiterer Ausgestaltungen der Erfindung wird auf die nachfolgende Beschreibung der Ausführungsbeispiele unter Bezugnahme auf die beiliegende Zeichnung verwiesen.

In der Zeichnung zeigt
- Figur 1: eine Vorrichtung zur kollektiven Behandlung von Oberflächen gemäß einer ersten Ausführungsform der vorliegenden Erfindung in schematischer Frontansicht,
- Figur 2: die Vorrichtung aus Figur 1, wobei die Aufnahmevorrichtung gegenüber der Figur 1 um eine horizontale Achse im Uhrzeigersinn verschwenkt ist,
- Figur 3: die Vorrichtung aus Figur 1, wobei ein Haltarm, der die Bestrahlungseinrichtung trägt, gegenüber der Aufnahmevorrichtung im Uhrzeigersinn in seine Befüllungsstellung geschwenkt ist,
- Figur 4: eine zweite Ausführungsform einer erfindungsgemäßen Vorrichtung zur kollektiven Behandlung von Oberflächen gemäß der vorliegenden Erfindung, und
- Figur 5: die Vorrichtung aus Figur 2, wobei die Aufnahmeeinrichtung und die Bestrahlungseinrichtung voneinander, zur Befüllung oder zum Wechsel des Aufnahmeraums getrennt sind.

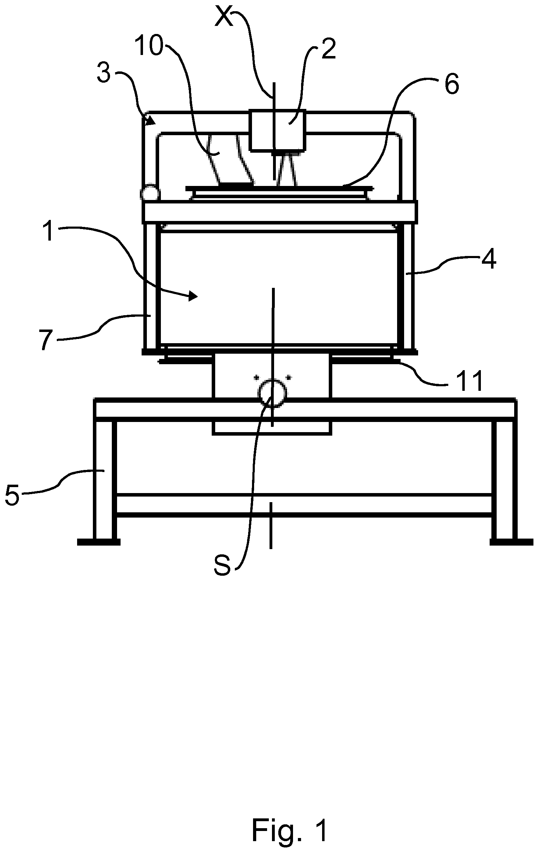

In den Figuren 1 bis 3 ist eine erste Ausführungsform einer erfindungsgemäßen Vorrichtung zur kollektiven Behandlung von Oberflächen einer Vielzahl von Objekten dargestellt. Die Vorrichtung umfasst eine Aufnahmeeinrichtung 1 und eine Bestrahlungseinrichtung 2, die an der Aufnahmeeinrichtung 1 über eine Halteeinrichtung 3 fixiert ist.

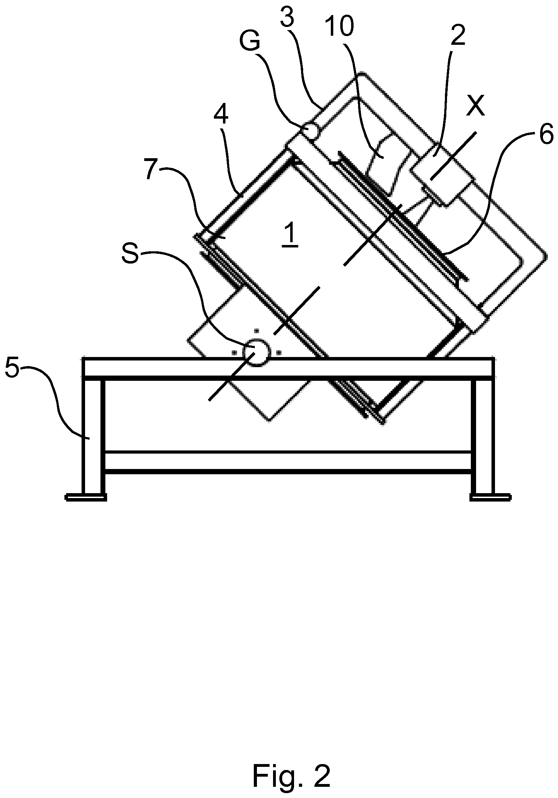

Die Aufnahmeeinrichtung 1 umfasst ein Gehäuse 4, das als Laserschutzumhausung ausgebildet ist und an einem Gestell 5 um eine horizontale Schwenkachse S, die senkrecht zur Bildebene der Figuren 1 bis 3 verläuft, verschwenkt werden kann, wie dies ein Vergleich der Figuren 1 und 2 erkennen lässt. Die Aufnahmeeinrichtung 1 umfasst ferner eine Trommel 7, die einen Aufnahmeraum definiert, in welchen die zu behandelnden Objekte in loser Schüttung eingefüllt werden und der durch eine in der Figur 1 obenliegende Öffnung 6 zugänglich ist. Die Trommel 7 ist in dem Gehäuse 4 um eine in der Figur 1 vertikale Rotationsachse X, die in der Bildebene verläuft und somit senkrecht zur Schwenkachse S steht, rotierend gelagert.

Die Bestrahlungseinrichtung 2 umfasst in dem dargestellten Ausführungsbeispiel eine Laserstrahleinrichtung in Form eines Laserkopfes, der gegenüberliegend zu der Öffnung 6 der Aufnahmeeinrichtung 1 angeordnet ist, um Strahlung durch die Öffnung 6 in den Aufnahmeraum von außen einzubringen.

Die Bestrahlungseinrichtung 2 kann zusätzlich eine dem Laserkopf zugeordnete Optik umfassen.

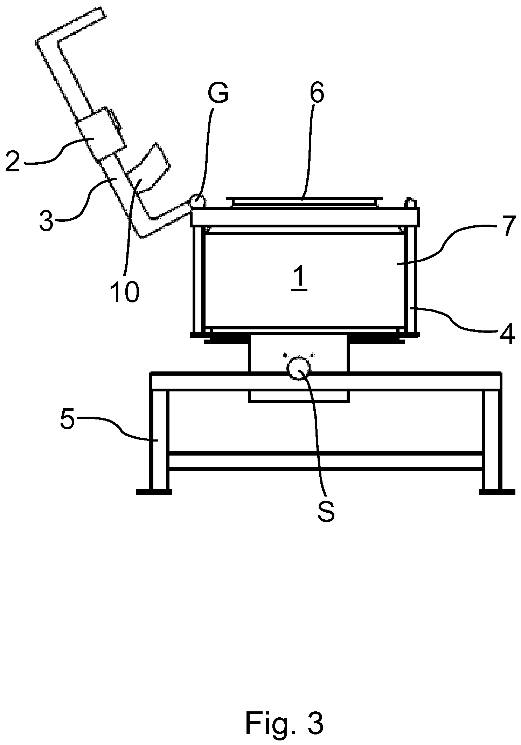

Die Halteeinrichtung 3 ist als Haltearm ausgebildet, der, wie in der Figur 1 erkennbar ist, in seiner Arbeitsstellung die Öffnung 6 der Aufnahmeeinrichtung 1 überspannt, so dass mittels der an dem Haltearm befestigten Bestrahlungseinrichtung 2 eine Strahlung in den Aufnahmeraum der Aufnahmeeinrichtung 1 eingebracht werden kann. Dabei ein Ende des Haltearms über ein Gelenk G mit dem Gehäuse 4 der Aufnahmeeinrichtung 1 verbunden und kann schwenkend zwischen der in Figur 1 gezeigten Arbeitsposition, in welcher der Haltearm die Öffnung 4 der Aufnahmeeinrichtung überspannt, und einer Befüllungsposition, in welcher der Haltearm aus seiner Arbeitsstellung weggeschwenkt ist, um die Öffnung 6 der Aufnahmeeinrichtung 1 freizugeben, bewegt werden (siehe Figur 3).

Die erfindungsgemäße Vorrichtung umfasst ferner eine Absaugeinrichtung, die dazu dient, Prozessdämpfe aus dem Aufnahmeraum der Aufnahmeeinrichtung 1 abzusaufen. Von der Aufnahmeeinrichtung ist lediglich eine Absaugtülle 10 erkennbar, welche an dem Haltearm der Halteeinrichtung 3 fixiert ist.

Bei der Vorrichtung sind die Aufnahmeeinrichtung 1 und die Bestrahlungseinrichtung 2 somit in der Arbeitsstellung des Haltearms fest miteinander verbunden, so dass die Bestrahlungseinrichtung 2 bei einer Schwenkbewegung der Aufnahmeeinrichtung 1 um die Schwenkachse S ebenfalls entsprechend geschwenkt wird mit dem Ergebnis, dass die relative Ausrichtung zwischen dem Aufnahmeraum und der Bestrahlungseinrichtung 2 unverändert bleibt, siehe Figuren 1 und 2. Dabei kann die Position und Winkellage der Bestrahlungseinrichtung 2 gegenüber dem Haltearm verändert werden, so dass in jeder Schwenklage der Aufnahmeeinrichtung 1 eingestellt werden kann, welcher Bereich des Aufnahmeraums durch die Bestrahlungseinrichtung 2 direkt angestrahlt wird. Es kann auch eine Steuervorrichtung vorgesehen sein, welche die Position und/oder die Winkellage der Bestrahlungseinrichtung 2 automatisch in Abhängigkeit von der Schwenklage der Aufnahmeeinrichtung 1 einstellt.

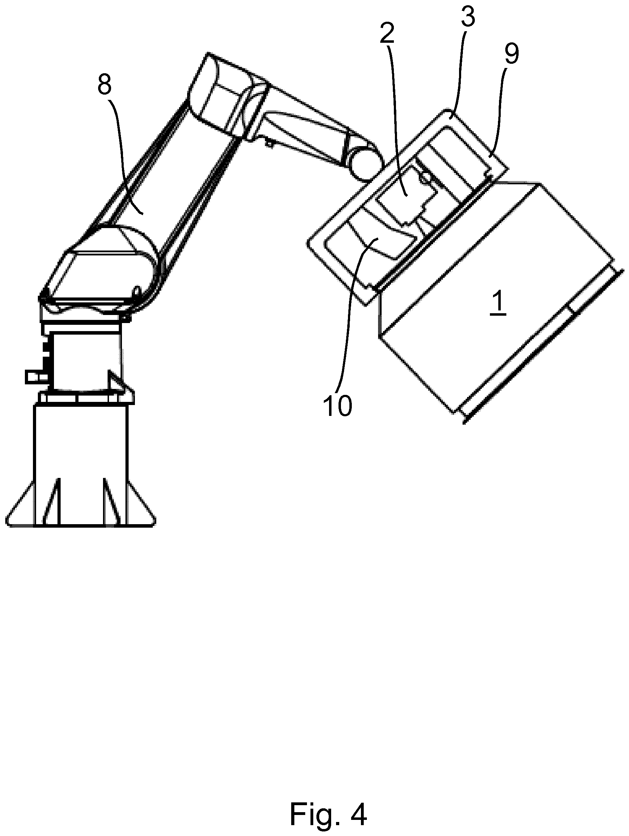

In der Figur 4 ist eine zweite Ausführungsform einer erfindungsgemäßen Vorrichtung zur kollektiven Behandlung von Oberflächen einer Vielzahl von Objekten gemäß der vorliegenden Erfindung dargestellt. In dieser Ausführungsform ist die Aufnahmeeinrichtung 1 in gleicher Weise ausgebildet wie bei der ersten Ausführungsform, so dass auf die entsprechenden Ausführungen verwiesen wird. Die Aufnahmeeinrichtung 1 ist allerdings nicht wie in der ersten Ausführungsform an einem Gestell abgestützt und schwenkend gelagert, sondern frei beweglich.

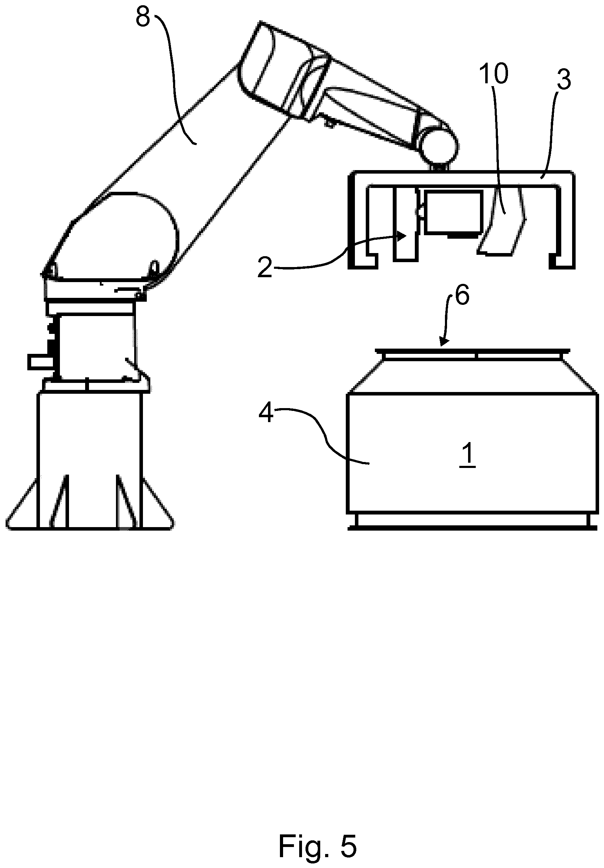

Die Halteeinrichtung 3 ist im Unterschied zu der ersten Ausführungsform nicht an dem Gehäuse 4 der Aufnahmeeinrichtung 1 angebracht, sondern in Form eines Greifers 9 ausgestaltet, welcher die Bestrahlungseinrichtung 2 trägt und an einem Roboter 8 angebracht ist. Zur Verbindung der Halteeinrichtung 3 mit der Aufnahmeeinrichtung 1 wird der Roboter 8 entsprechend so positioniert, dass der Greifer 9 den oberen Rand des Gehäuses 4 der Aufnahmeeinrichtung 1 umgreift, und den Greifer 9 betätigt, um die Verbindung herzustellen, wie in Figur 5 dargestellt. Durch Betätigung des Roboters 8 kann die Anordnung bzw. Einheit bestehend aus Aufnahmeeinrichtung 1, Halteeinrichtung 3 und Bestrahlungseinrichtung 2 in unterschiedliche Schwenklagen gebracht werden, wie dies ein Vergleich der Figuren 4 und 5 zeigt, und in jeder Schwenklage kann die Trommel 5 der Aufnahmeeinrichtung 1 rotiert werden und durch die Bewegungsmöglichkeiten des Roboters auch taumelnd rotiert werden. Ebenso ist es möglich, wie vorstehend beschrieben, die Position und/oder die Winkellage der Bestrahlungseinrichtung 2 einzustellen.

Auf diese Weise können die zu behandelnden Objekte, die in dem Aufnahmeraum in loser Schüttung enthalten sind, optimal umgewälzt, und gleichmäßig bestrahlt werden.

### Bezugszeichenliste

- 1: Aufnahmeeinrichtung
- 2: Bestrahlungseinrichtung
- 3: Halteeinrichtung
- 4: Gehäuse
- 5: Gestell
- 6: Öffnung
- 7: Trommel
- 8: Roboter
- 9: Greifer
- 10: Absaugtülle
- 11: Befestigungsmittel
- G: Gelenk
- S: Schwenkachse
- X: Rotationsachse

## Patentansprüche

1. Vorrichtung zur kollektiven Behandlung von Oberflächen einer Vielzahl von Objekten, insbesondere von losem Schüttgut, mit
einer Aufnahmeeinrichtung (1), die einen Aufnahmeraum für die zu behandelnden Objekte definiert, wobei der Aufnahmeraum durch eine Öffnung (6) der Aufnahmeeinrichtung (1) zugänglich ist, und
einer Bestrahlungseinrichtung (2), die angeordnet und ausgebildet ist, um Strahlung in den Aufnahmeraum einzubringen und so in den Aufnahmeraum eingebrachte Objekte zu behandeln,
wobei die Aufnahmeeinrichtung (1) mit dem Aufnahmeraum bewegbar ist, um insbesondere die Position und/oder die Ausrichtung des Aufnahmeraums zu verändern,
**dadurch gekennzeichnet, dass**
die Aufnahmeeinrichtung (1) und die Bestrahlungseinrichtung (2) derart miteinander verbunden, insbesondere lösbar verbunden sind, dass die Bestrahlungseinrichtung (2) bei einer Bewegung der Aufnahmeeinrichtung (1) mitbewegt wird, so dass die relative Ausrichtung zwischen dem Aufnahmeraum und der Bestrahlungseinrichtung (2) unverändert bleibt.

2. Vorrichtung zur kollektiven Behandlung von Oberflächen einer Vielzahl von Objekten nach Anspruch 1, **dadurch gekennzeichnet, dass** die Bestrahlungseinrichtung (2) der Öffnung (6) der Aufnahmevorrichtung gegenüberliegend angeordnet ist, um Strahlung durch die Öffnung (6) in den Aufnahmeraum von außen einzubringen.

3. Vorrichtung zur kollektiven Behandlung von Oberflächen einer Vielzahl von Objekten nach Anspruch 1 oder 2, **dadurch gekennzeichnet, dass** die Bestrahlungseinrichtung (2) an einer Halteeinrichtung, insbesondere an einem Haltearm oder einen Halterahmen der Halteeinrichtung (3) vorgesehen ist, welche die Öffnung (6) der Aufnahmeeinrichtung (1) außenseitig überspannt, und die Bestrahlungseinrichtung (2) an der Halteeinrichtung (3) fixiert ist, wobei die Halteeinrichtung, insbesondere der Haltearm oder der Halterahmen bevorzugt schwenkbar an der Aufnahmeeinrichtung (1) gehalten ist und zwischen einer Arbeitsposition, in welcher die Halteeinrichtung (3) die Öffnung (6) der Aufnahmeeinrichtung (1) überspannt, und einer Befüllungsposition, in welcher die Halteeinrichtung (3) aus ihrer Arbeitsstellung weggeschwenkt ist, um die Öffnung (6) der Aufnahmeeinrichtung (1) freizugeben, verschwenkt werden kann.

4. Vorrichtung zur kollektiven Behandlung von Oberflächen einer Vielzahl von Objekten nach einem der vorherigen Ansprüche, **dadurch gekennzeichnet, dass** die Aufnahmeeinrichtung (1) eine den Aufnahmeraum definierende Trommel (7) aufweist, die an einem Rahmen oder einem Gehäuse (4) der Aufnahmeeinrichtung (1) gehalten und relativ dazu um eine Rotationsachse (X), insbesondere rotierend oder taumelnd, gedreht werden kann.

5. Vorrichtung zur kollektiven Behandlung von Oberflächen einer Vielzahl von Objekten nach Anspruch 4, **dadurch gekennzeichnet, dass** die Rotationsachse (X) zentral durch die Öffnung (6) der Aufnahmeeinrichtung (1) verläuft und insbesondere senkrecht zu einer Ebene der Öffnung (6) ausgerichtet ist.

6. Vorrichtung zur kollektiven Behandlung von Oberflächen einer Vielzahl von Objekten nach einem der vorherigen Ansprüche, **dadurch gekennzeichnet, dass** die Aufnahmeeinrichtung (1), insbesondere um eine horizontale Schwenkachse (S) schwenkend bewegbar, gelagert ist.

7. Vorrichtung zur kollektiven Behandlung von Oberflächen einer Vielzahl von Objekten nach Anspruch 4 oder 5 und Anspruch 6, **dadurch gekennzeichnet, dass** die Schwenkachse (S) und die Rotationsachse (X) senkrecht zueinander stehen.

8. Vorrichtung zur kollektiven Behandlung von Oberflächen einer Vielzahl von Objekten nach einem der vorherigen Ansprüche, **dadurch gekennzeichnet, dass** Befestigungsmittel (11) vorgesehen sind, um die Anordnung aus Aufnahmeeinrichtung (1) und Bestrahlungseinrichtung (2) an einem Roboterarm zu befestigen.

9. Vorrichtung zur kollektiven Behandlung von Oberflächen einer Vielzahl von Objekten nach Anspruch 8, **gekennzeichnet, durch** einen Roboter (8) mit einem Roboterarm, an dem die Anordnung bestehend aus Aufnahmeeinrichtung (1) und Bestrahlungseinrichtung (2) gehalten und durch eine Bewegung des Roboterarms bewegbar ist.

10. Vorrichtung zur kollektiven Behandlung von Oberflächen einer Vielzahl von Objekten nach einem der vorherigen Ansprüche, **dadurch gekennzeichnet, dass** die Bestrahlungseinrichtung (2) an einer Greifer (9) befestigt ist, die an einem Roboterarm vorgesehen ist oder angebracht werden kann und die ausgebildet ist, die Aufnahmeeinrichtung (1) zu greifen, um die Bestrahlungseinrichtung (2) an der Aufnahmeeinrichtung (1) lösbar zu befestigen.

11. Vorrichtung zur kollektiven Behandlung von Oberflächen einer Vielzahl von Objekten nach Anspruch 10, **gekennzeichnet durch** einen Roboter (8) mit einem Roboterarm, an dem die Greifer (9) befestigt ist.

12. Vorrichtung zur kollektiven Behandlung von Oberflächen einer Vielzahl von Objekten nach einem der vorherigen Ansprüche, **dadurch gekennzeichnet, dass** die Position und/oder die Ausrichtung der Bestrahlungseinrichtung (2) gegenüber der Aufnahmeeinrichtung (1) einstellbar ist und insbesondere auch während des Betriebs der Vorrichtung verändert werden kann.

13. Vorrichtung zur kollektiven Behandlung von Oberflächen einer Vielzahl von Objekten nach einem der vorherigen Ansprüche, **dadurch gekennzeichnet, dass** die Bestrahlungseinrichtung (2) wenigstens eine Strahlungsquelle aufweist, die insbesondere als Laserstrahlquelle ausgebildet ist, wobei, bevorzugt jede Strahlungsquelle individuell gegenüber der Aufnahmeeinrichtung (1) verstellbar ist, wobei jede Strahlungsquelle bevorzugt eine zugeordnete Optik umfasst.

14. Vorrichtung zur kollektiven Behandlung von Oberflächen einer Vielzahl von Objekten nach einem der vorherigen Ansprüche, **dadurch gekennzeichnet, dass** die Vorrichtung eine Absaugeinrichtung aufweist, um Prozessdämpfe aus dem Aufnahmeraum abzusaugen.
